# EUROPEAN PATENT APPLICATION

(11) **EP 2 998 845 A1**
(43) Date of publication of application: **23.03.2016**
(21) Application number: 15184219.2
(22) Date of filing: 08.09.2015
(51) Int. Cl.: G06F 3/048, G06F 3/0481, H04N 21/472

(54) **USER INTERFACE BASED INTERACTION METHOD AND RELATED APPARATUS**

(30) Priority: 16.09.2014 CN 201410471617
(71) Applicant: Huawei Technologies Co., Ltd., Longgang District Shenzhen, Guangdong 518129 (CN)
(72) Inventor: Ekstrand, Simon, Shenzhen Guangdong 518129 (CN); Li, Hang, Shenzhen Guangdong 518129 (CN)
(74) Representative: Pfenning, Meinig & Partner mbB

(57) **Abstract**

Embodiments of the present invention disclose a user interface based interaction method and a related apparatus. The user interface based interaction method includes: displaying a user interface; when a level i focal point stays in a level i area X of the user interface, if an instruction for moving a level i focal point is received, in response to the instruction for moving a level i focal point, moving the level i focal point from the level i area X of the user interface to a level i area Y of the user interface, where the level i area Y includes an interface element a and an interface element b; and when the level i focal point stays in the level i area Y of the user interface, if an instruction for moving a level i+1 focal point is received, in response to the instruction for moving a level i+1 focal point, moving a level i+1 focal point from the interface element a in the level i area Y to the interface element b in the level i area Y. Technical solutions of the embodiments of the present invention help reduce a quantity of operations required when a user selects a target interface element in a user interface, thereby improving user experience.

## Description

### technical field

The present invention relates to the field of electronic technologies, and specifically, to a user interface based interaction method and a related apparatus.

### Background

Currently, in many products, a user often needs to select a target interface element by moving a focal point in a user interface. A manner of moving a focal point in a user interface of a product such as an existing Internet Protocol television (internet protocol television in English, IPTV for short) lacks variety, and generally, the focal point can only be moved gradually between adjacent application icons in the user interface.

It is found through practice that when a user interface includes a relatively large quantity of interface elements (for example, hundreds of interaction portals), if a target interface element is selected by using an existing focal point moving manner, a user often needs to perform many focal point moving operations to move a focal point to the target interface element; in this manner, because the user needs to perform a relatively large quantity of operations to select a target interface element, user experience may be affected.

### Summary

Embodiments of the present invention provide a user interface based interaction method and a related apparatus, so as to reduce a quantity of operations required when a user selects a target interface element in a user interface, thereby improving user experience.

A first aspect of the present invention provides a user interface based interaction method, including:
displaying a user interface;
when a level i focal point stays in a level i area X of the user interface, if an instruction for moving a level i focal point is received, in response to the instruction for moving a level i focal point, moving the level i focal point from the level i area X of the user interface to a level i area Y of the user interface, where the level i area Y includes an interface element a and an interface element b; and
when the level i focal point stays in the level i area Y of the user interface, if an instruction for moving a level i+1 focal point is received, in response to the instruction for moving a level i+1 focal point, moving a level i+1 focal point from the interface element a in the level i area Y to the interface element b in the level i area Y.

With reference to the first aspect, in a first possible implementation manner of the first aspect, the method further includes:
when the level i focal point is moved from the level i area X to the level i area Y, displaying the level i area Y according to a first display parameter, and displaying at least one level i area in the user interface except the level i area Y according to a second display parameter, where the first display parameter is different from the second display parameter.

With reference to the first possible implementation manner of the first aspect, in a second possible implementation manner of the first aspect,
the method further includes: when duration for which the level i focal point stays in the level i area Y exceeds a duration threshold, displaying the level i area Y and the at least one level i area according to a third display parameter.

With reference to the first possible implementation manner of the first aspect or the second possible implementation manner of the first aspect, in a third possible implementation manner of the first aspect, that the first display parameter is different from the second display parameter is specifically:
at least one of the following: display brightness corresponding to the first display parameter is different from display brightness corresponding to the second display parameter, a display background corresponding to the first display parameter is different from a display background corresponding to the second display parameter, display contrast corresponding to the first display parameter is different from display contrast corresponding to the second display parameter, color saturation corresponding to the first display parameter is different from color saturation corresponding to the second display parameter, display transparency corresponding to the first display parameter is different from display transparency corresponding to the second display parameter, a depth-of-field value corresponding to the first display parameter is different from a depth-of-field value corresponding to the second display parameter, a display deformation degree corresponding to the first display parameter is different from a display deformation degree corresponding to the second display parameter, an area covering corresponding to the first display parameter is different from an area covering corresponding to the second display parameter, and a display layer corresponding to the first display parameter is different from a display layer corresponding to the second display parameter.

With reference to the first aspect, the first possible implementation manner of the first aspect, the second possible implementation manner of the first aspect, or the third possible implementation manner of the first aspect, in a fourth possible implementation manner of the first aspect, the interface element b is an interaction portal or a level i+1 area Z in the level i area Y.

With reference to the fourth possible implementation manner of the first aspect, in a fifth possible implementation manner of the first aspect, the interface element b is the level i+1 area Z in the level i area Y, where the level i+1 area Z includes an interface element c and an interface element d; and
the method further includes:
when the level i+1 focal point stays in the level i+1 area Z, if an instruction for moving a level i+2 focal point is received, in response to the instruction for moving a level i+2 focal point, moving a level i+2 focal point from the interface element c in the level i+1 area Z to the interface element d in the level i+1 area Z.

With reference to the first aspect, the first possible implementation manner of the first aspect, the second possible implementation manner of the first aspect, the third possible implementation manner of the first aspect, the fourth possible implementation manner of the first aspect, or the fifth possible implementation manner of the first aspect, in a sixth possible implementation manner of the first aspect, the instruction for moving a level i focal point is sent by a remote control, an air mouse, or a keyboard.

With reference to the first aspect, the first possible implementation manner of the first aspect, the second possible implementation manner of the first aspect, the third possible implementation manner of the first aspect, the fourth possible implementation manner of the first aspect, the fifth possible implementation manner of the first aspect, or the sixth possible implementation manner of the first aspect, in a seventh possible implementation manner of the first aspect,
types of interface elements included in the level i area Y are the same, interface elements included in the level i area Y are adjacent, an absolute value of a difference between a quantity of interface elements included in the level i area X and a quantity of interface elements included in the level i area Y is less than or equal to a first threshold, or an absolute value of a difference between an area of the level i area X and an area of the level i area Y is less than or equal to a second threshold.

A second aspect of the present invention provides an electronic device, including:
a display unit, configured to display a user interface; and
a focal point moving unit, configured to: when a level i focal point stays in a level i area X of the user interface, if an instruction for moving a level i focal point is received, in response to the instruction for moving a level i focal point, move the level i focal point from the level i area X of the user interface to a level i area Y of the user interface, where the level i area Y includes an interface element a and an interface element b; and when the level i focal point stays in the level i area Y of the user interface, if an instruction for moving a level i+1 focal point is received, in response to the instruction for moving a level i+1 focal point, move a level i+1 focal point from the interface element a in the level i area Y to the interface element b in the level i area Y.

With reference to the second aspect, in a first possible implementation manner of the second aspect, the electronic device further includes:
a highlight control unit, configured to: when the level i focal point is moved from the level i area X to the level i area Y, display the level i area Y according to a first display parameter, and display at least one level i area in the user interface except the level i area Y according to a second display parameter, where the first display parameter is different from the second display parameter.

With reference to the first possible implementation manner of the second aspect, in a second possible implementation manner of the second aspect, the highlight control unit is further configured to: when duration for which the level i focal point stays in the level i area Y exceeds a duration threshold, display the level i area Y and the at least one level i area according to a third display parameter.

With reference to the first possible implementation manner of the second aspect or the second possible implementation manner of the second aspect, in a third possible implementation manner of the second aspect, that the first display parameter is different from the second display parameter is specifically:
at least one of the following: display brightness corresponding to the first display parameter is different from display brightness corresponding to the second display parameter, a display background corresponding to the first display parameter is different from a display background corresponding to the second display parameter, display contrast corresponding to the first display parameter is different from display contrast corresponding to the second display parameter, color saturation corresponding to the first display parameter is different from color saturation corresponding to the second display parameter, display transparency corresponding to the first display parameter is different from display transparency corresponding to the second display parameter, a depth-of-field value corresponding to the first display parameter is different from a depth-of-field value corresponding to the second display parameter, a display deformation degree corresponding to the first display parameter is different from a display deformation degree corresponding to the second display parameter, an area covering corresponding to the first display parameter is different from an area covering corresponding to the second display parameter, and a display layer corresponding to the first display parameter is different from a display layer corresponding to the second display parameter.

With reference to the second aspect, the first possible implementation manner of the second aspect, the second possible implementation manner of the second aspect, or the third possible implementation manner of the second aspect, in a fourth possible implementation manner of the second aspect, the interface element b is an interaction portal or a level i+1 area Z in the level i area Y.

With reference to the fourth possible implementation manner of the second aspect, in a fifth possible implementation manner of the second aspect, the interface element b is the level i+1 area Z in the level i area Y, where the level i+1 area Z includes an interface element c and an interface element d; and
the focal point moving unit is further configured to: when the level i+1 focal point stays in the level i+1 area Z, if an instruction for moving a level i+2 focal point is received, in response to the instruction for moving a level i+2 focal point, move a level i+2 focal point from the interface element c in the level i+1 area Z to the interface element d in the level i+1 area Z.

With reference to the second aspect, the first possible implementation manner of the second aspect, the second possible implementation manner of the second aspect, the third possible implementation manner of the second aspect, the fourth possible implementation manner of the second aspect, or the fifth possible implementation manner of the second aspect, in a sixth possible implementation manner of the second aspect, the instruction for moving a level i focal point is sent by a remote control, an air mouse, or a keyboard.

With reference to the second aspect, the first possible implementation manner of the second aspect, the second possible implementation manner of the second aspect, the third possible implementation manner of the second aspect, the fourth possible implementation manner of the second aspect, the fifth possible implementation manner of the second aspect, or the sixth possible implementation manner of the second aspect, in a seventh possible implementation manner of the second aspect,
types of interface elements included in the level i area Y are the same, interface elements included in the level i area Y are adjacent, an absolute value of a difference between a quantity of interface elements included in the level i area X and a quantity of interface elements included in the level i area Y is less than or equal to a first threshold, or an absolute value of a difference between an area of the level i area X and an area of the level i area Y is less than or equal to a second threshold.

It can be seen that multiple levels of focal points are brought in the technical solutions of the embodiments of the present invention to assist in locating a target interface element, where when a level i focal point stays in a level i area X of a user interface, if an instruction for moving a level i focal point is received, in response to the instruction for moving a level i focal point, the level i focal point is moved from the level i area X of the user interface to a level i area Y of the user interface. Because the level i focal point is moved between areas of the user interface, the level i focal point can be moved across multiple interface elements in the user interface by performing one movement operation, and a current moving range of a level i+1 focal point is a level i area in which the level i focal point currently stays; this helps rapidly locate a target interface element, thereby reducing a quantity of operations required when a user selects a target interface element in a user interface, and improving user experience.

### Brief description of drawings

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic flowchart of a user interface based interaction method according to an embodiment of the present invention;
FIG. 2 is a schematic flowchart of another user interface based interaction method according to an embodiment of the present invention;
FIG. 3-a, FIG. 3-b, and FIG. 3-c are several schematic diagrams of presenting a spotlight illumination effect in an area in a user interface according to an embodiment of the present invention;

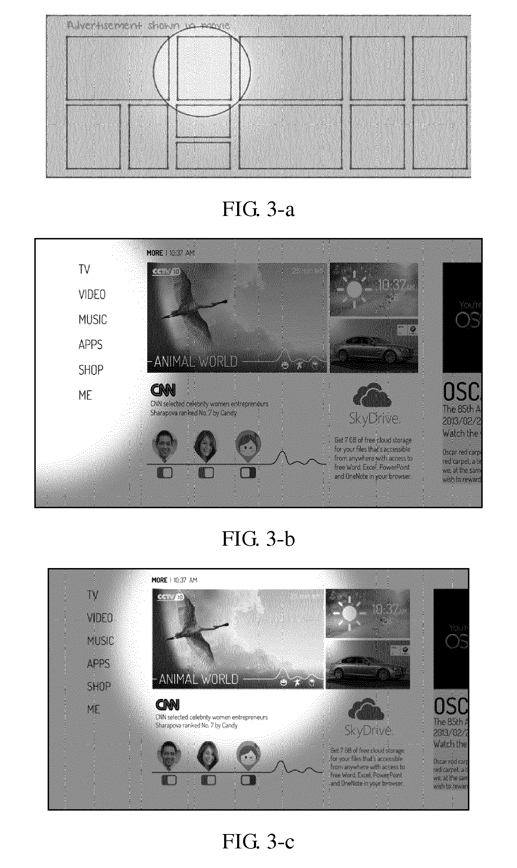

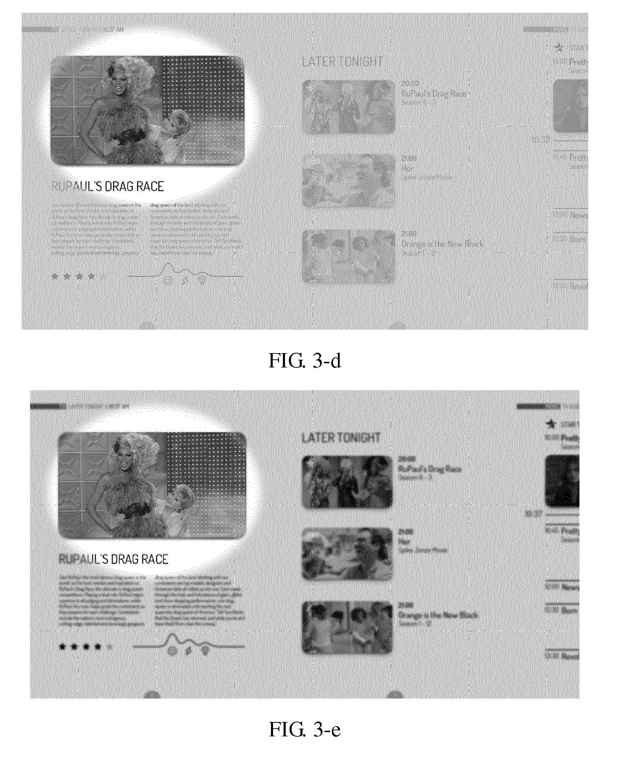

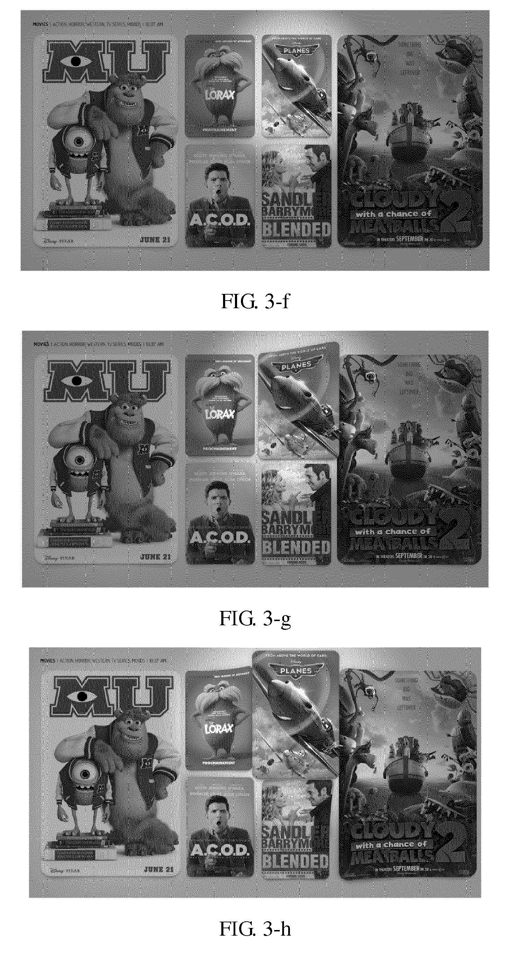

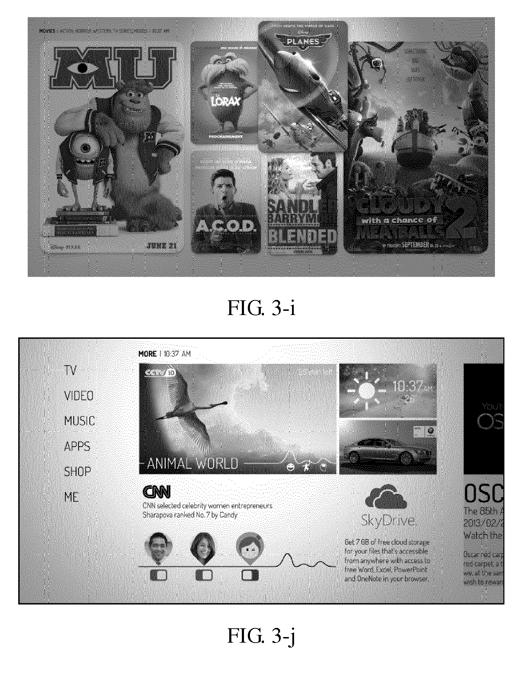

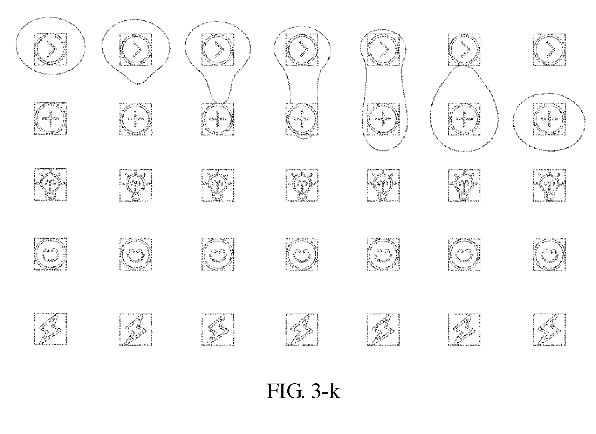

FIG. 3-d and FIG. 3-e are two schematic diagrams showing that a level 1 focal point stays in a level 1 area according to an embodiment of the present invention;
FIG. 3-f to FIG. 3-i are schematic diagrams showing a deformation process of a level 1 area in which a level 1 focal point stays according to an embodiment of the present invention;
FIG. 3-j is a schematic diagram showing gradual expansion of an area in which a spotlight illumination effect is presented according to an embodiment of the present invention;
FIG. 3-k is a schematic diagram showing that a level 2 focal point is moved between two adjacent interaction portals according to an embodiment of the present invention;

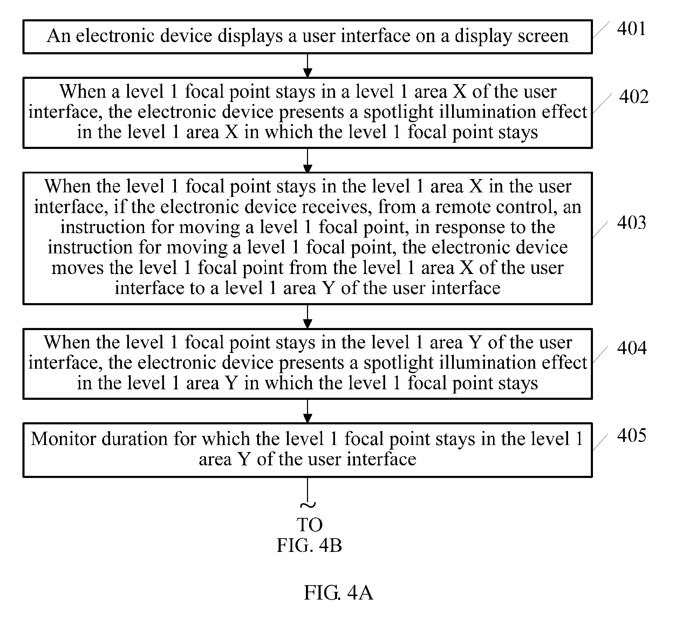

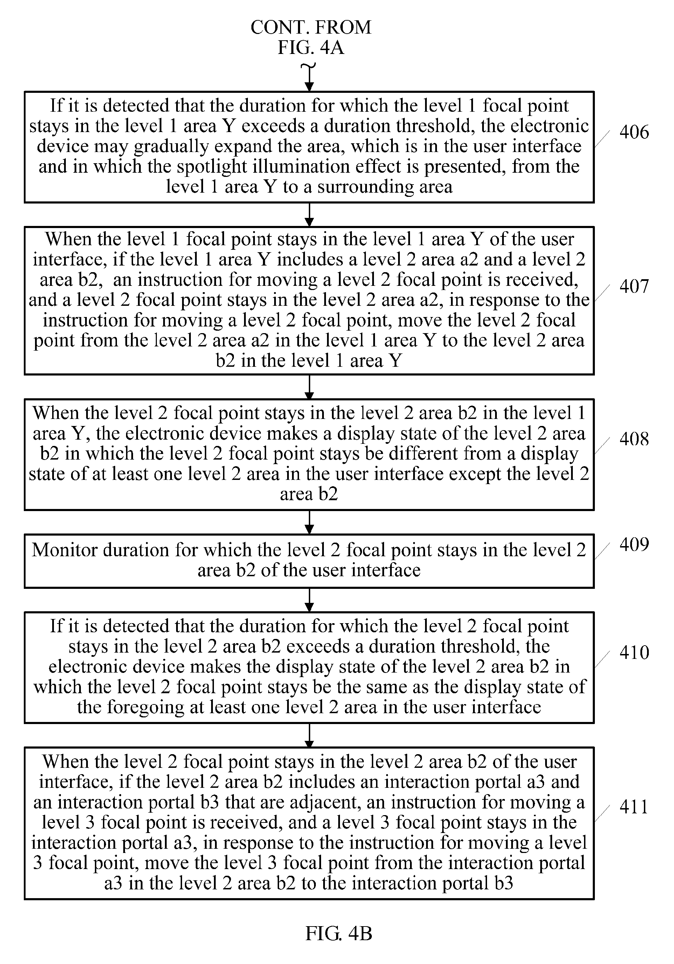

FIG. 4A and FIG. 4B are a schematic flowchart of another user interface based interaction method according to an embodiment of the present invention;

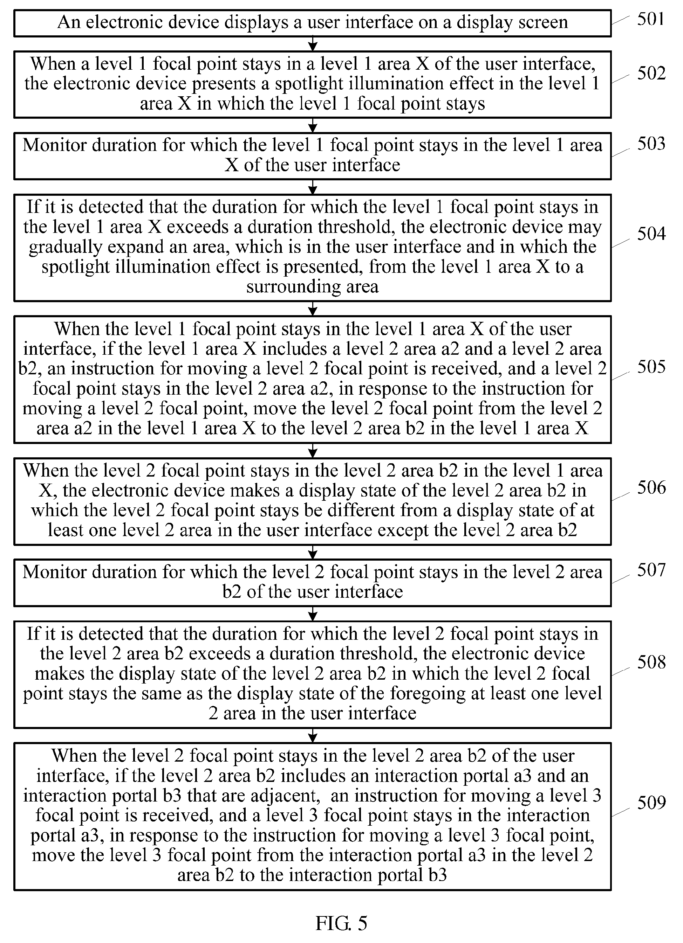

FIG. 5 is a schematic flowchart of another user interface based interaction method according to an embodiment of the present invention;

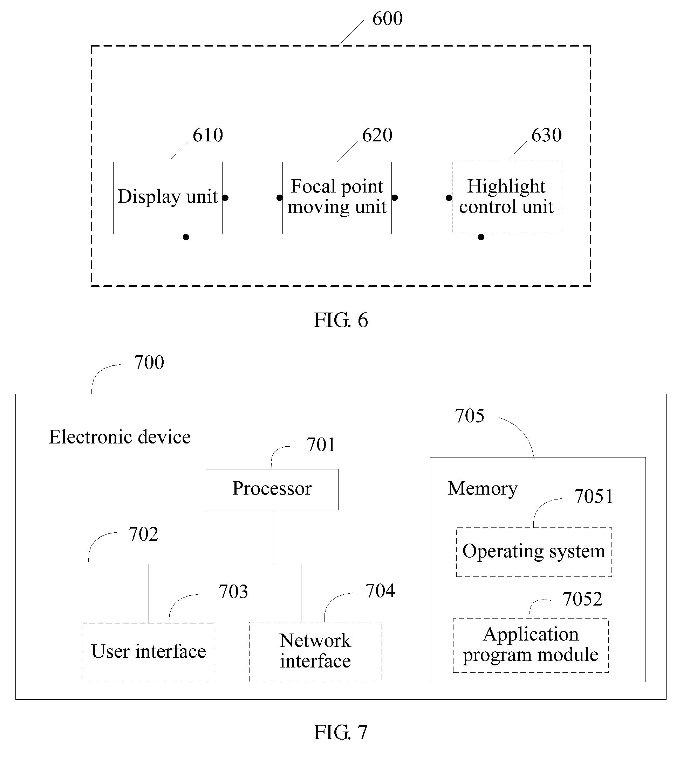

FIG. 6 is a schematic diagram of an electronic device according to an embodiment of the present invention; and
FIG. 7 is a schematic diagram of another electronic device according to an embodiment of the present invention.

### description of embodiments

Embodiments of the present invention provide a user interface based interaction method and a related apparatus, so as to reduce a quantity of operations required when a user selects a target interface element in a user interface, thereby improving user experience.

To make a person skilled in the art understand the technical solutions in the present invention better, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

Detailed descriptions are provided below separately.

In the specification, claims, and accompanying drawings of the present invention, the terms "first", "second", "third", "fourth", and so on are intended to distinguish between different objects but are not intended to describe a specific sequence. Moreover, the terms "include", "comprise", and any variation thereof are intended to cover a non-exclusive inclusion. For example, a process, method, system, product, or device that includes a series of steps or units is not limited to including the listed steps or units, but optionally also includes steps or units that are not listed, or optionally also includes other inherent steps or units of the process, method, product, or device.

A user interface (user interface in English) based interaction method provided in the embodiments of the present invention is first introduced below. The user interface based interaction method may be performed by any apparatus that needs to display a user interface, such as a mobile phone, a tablet computer, a notebook computer, a television, or a smart home device.

In an embodiment of a user interface based interaction method of the present invention, a user interface based interaction method includes: displaying a user interface; when a level i focal point stays in a level i area X of the user interface, if an instruction for moving a level i focal point is received, in response to the instruction for moving a level i focal point, moving the level i focal point from the level i area X of the user interface to a level i area Y of the user interface, where the level i area Y includes an interface element a and an interface element b; and when the level i focal point stays in the level i area Y of the user interface, if an instruction for moving a level i+1 focal point is received, in response to the instruction for moving a level i+1 focal point, moving a level i+1 focal point from the interface element a in the level i area Y to the interface element b in the level i area Y

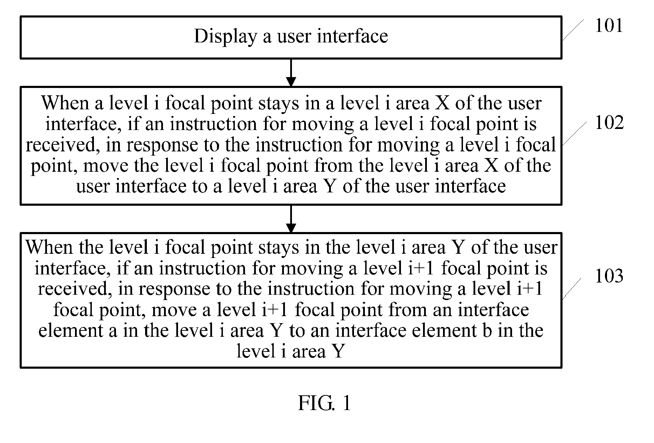

Referring to FIG. 1, FIG. 1 is a schematic flowchart of a user interface based interaction method according to an embodiment of the present invention. As shown in FIG. 1, a user interface based interaction method provided in an embodiment of the present invention may include the following content:

Step 101. Display a user interface.

Step 102. When a level i focal point stays in a level i area X of the user interface, if an instruction for moving a level i focal point is received, in response to the instruction for moving a level i focal point, move the level i focal point from the level i area X of the user interface to a level i area Y of the user interface.

The level i area Y includes multiple interface elements, where the multiple interface elements include an interface element a and an interface element b, and certainly, may also include other interface elements. The interface elements included in the level i area Y may be, for example, an interaction portal or a level i+1 area. For example, the interface element b is an interaction portal or a level i+1 area Z in the level i area Y.

The level i area X and the level i area Y may be two level i areas that are adjacent or not adjacent.

Step 103. When the level i focal point stays in the level i area Y of the user interface, if an instruction for moving a level i+1 focal point is received, in response to the instruction for moving a level i+1 focal point, move a level i+1 focal point from an interface element a in the level i area Y to an interface element b in the level i area Y.

The interface element a and the interface element b may be two interface elements that are adjacent or not adjacent.

The interface element is a component of the user interface, and the interface element may be an area, an interaction portal, or another object.

i may be an integer, and focal points of two adjacent levels may be considered as having a relationship of a child focal point and a parent focal point.

For example, the level i+1 focal point may be considered as a child focal point of the level i focal point. The level i focal point may be considered as a parent focal point of the level i+1 focal point. The child focal point and the parent focal point are relative concepts, that is, a given focal point may be a child focal point of a focal point, and the given focal point may also be a parent focal point of another focal point. For example, although the level i+1 focal point may be considered as a child focal point of the level i focal point, the level i+1 focal point may also be considered as a parent focal point of a level i+2 focal point, and the level i focal point may also be considered as a child focal point of a level i-1 focal point.

It can be understood that a current moving range of a focal point is an area in which a parent focal point of the focal point currently stays. For example, a current moving range of the level i+1 focal point is a level i area in which the level i focal point currently stays. Specifically, for example, if the level i focal point currently stays in the level i area X of the user interface, the level i+1 focal point may be currently moved between interface elements included in the level i area X. Specifically, for another example, when the level i focal point currently stays in the level i area Y of the user interface, the level i+1 focal point may be moved between interface elements included in the level i area Y, and so on.

The level i area is an area in which the level i focal point can stay or an area to which the level i focal point can be switched or moved, and the user interface includes multiple level i areas. If a level i-1 area exists, one level i-1 area may include at least one level i area.

It can be seen that multiple levels of focal points are brought in this embodiment to assist in locating a target interface element, where when a level i focal point stays in a level i area X of a user interface, if an instruction for moving a level i focal point is received, in response to the instruction for moving a level i focal point, the level i focal point is moved from the level i area X of the user interface to a level i area Y of the user interface. Because the level i focal point is moved between areas, the level i focal point can be moved across multiple interface elements by performing one movement operation, and a current moving range of a level i+1 focal point is the level i area in which the level i focal point currently stays; this helps rapidly locate a target interface element, thereby reducing a quantity of operations required when a user selects a target interface element in a user interface, and improving user experience.

Optionally, in some possible implementation manners of the present invention, the method may further include: displaying the level i area Y according to a first display parameter, and displaying at least one level i area in the user interface except the level i area Y according to a second display parameter, where the first display parameter is different from the second display parameter. For example, the foregoing at least one level i area may include all level i areas in the user interface except the level i area Y. For another example, the foregoing at least one level i area may include some or all level i areas in the user interface that are around the level i area Y For another example, the foregoing at least one level i area may include some or all level i areas in the user interface that are adjacent to the level i area Y

It can be understood that when the level i focal point is moved from the level i area X to the level i area Y, the level i area Y is displayed according to the first display parameter, and the at least one level i area in the user interface except the level i area Y is displayed according to the second display parameter; because the first display parameter is different from the second display parameter, that is, a display parameter corresponding to the level i area Y is different from a display parameter corresponding to the foregoing at least one level i area, a display state of the level i area Y is different from display states of some or all level i areas in the user interface that are adjacent to the level i area Y; one objective of this is to help a user distinguish the level i area in which the level i focal point currently stays.

Optionally, in some possible implementation manners of the present invention, the method may further include:
when duration for which the level i focal point stays in the level i area Y exceeds a duration threshold, displaying the level i area Y and the at least one level i area according to a third display parameter, where the third display parameter is the same as or different from the first display parameter, or the third display parameter is the same as or different from the second display parameter.

The foregoing duration threshold may be, for example, 2 seconds, 3 seconds, 5 seconds, or other duration. It is found by analyzing user behaviors that when the duration for which the level i focal point stays in the level i area Y exceeds the duration threshold, it generally indicates that the user may want to select an interaction portal located in the level i area Y The level i area Y and the at least one level i area are displayed according to the third display parameter, that is, a display parameter corresponding to the level i area Y is the same as a display parameter corresponding to the foregoing at least one level i area, so that a display state of the level i area Y is the same as a display state of the at least one level i area. This, to some extent, helps improve user experience.

It can be understood that the interaction portal in the user interface may be, for example, a lower-level menu portal, a higher-level menu portal, a lower-level page portal, a higher-level page portal, a program playback portal, a game running portal, or another application portal. Therefore, by selecting an interaction portal, the user may enter a lower-level menu, a higher-level menu, a lower-level page, a higher-level page, playback of a program, running of a game, or the like.

That the first display parameter is different from the second display parameter may cause that the level i area Y and the at least one level i area present different display states. Optionally, in some possible implementation manners of the present invention, that the first display parameter is different from the second display parameter is specifically at least one of the following: display brightness corresponding to the first display parameter is different from display brightness corresponding to the second display parameter, a display background corresponding to the first display parameter is different from a display background corresponding to the second display parameter, display contrast corresponding to the first display parameter is different from display contrast corresponding to the second display parameter, color saturation corresponding to the first display parameter is different from color saturation corresponding to the second display parameter, display transparency corresponding to the first display parameter is different from display transparency corresponding to the second display parameter, a depth-of-field value corresponding to the first display parameter is different from a depth-of-field value corresponding to the second display parameter, a display deformation degree corresponding to the first display parameter is different from a display deformation degree corresponding to the second display parameter, an area covering corresponding to the first display parameter is different from an area covering corresponding to the second display parameter, and a display layer corresponding to the first display parameter is different from a display layer corresponding to the second display parameter (for example, a display layer of the level i area Y is in front of a display layer of a level i area that is adjacent to the level i area Y and in the user interface, or a display layer of the level i area Y is behind a display layer of a level i area that is adjacent to the level i area Y and in the user interface).

Certainly, in some possible implementation manners of the present invention, another manner may also be used to make the display state of the level i area Y different from the display state of the at least one level i area in the user interface except the level i area Y.

It can be understood that, one objective of making the display state of the level i area Y different from the display state of the at least one level i area in the user interface except the level i area Y is to highlight the area in which the level i focal point currently stays, so that the user can intuitively view the area in which the level i focal point currently stays.

Optionally, in some possible implementation manners of the present invention, the interface element b is an interaction portal or a level i+1 area Z in the level i area Y. Certainly, the interface element a may also be an interaction portal or a level i+1 area Z2 in the level i area Y.

Optionally, in some possible implementation manners of the present invention, the interface element b may be a level i+1 area Z in the level i area Y, where the level i+1 area Z may include an interface element c and an interface element d, and certainly, the level i+1 area Z may also include other interface elements. The method may further include: when the level i+1 focal point stays in the level i+1 area Z, if an instruction for moving a level i+2 focal point is received, in response to the instruction for moving a level i+2 focal point, moving a level i+2 focal point from the interface element c in the level i+1 area Z to the interface element d in the level i+1 area Z. The interface element c may be an interaction portal or a level i+2 area W in the level i+1 area Z. The interface element d may also be an interaction portal or a level i+2 area W2 in the level i+1 area Z.

Optionally, in some possible implementation manners of the present invention, the instruction for moving a level i focal point may be sent by a remote control, an air mouse, a keyboard, or the like. Certainly, another instruction for moving another focal point may also be sent by a remote control, an air mouse, or a keyboard.

Optionally, in some possible implementation manners of the present invention, types of interface elements included in the level i area Y are the same (in other words, types of interface elements in a same level i area are the same, for example, are all game portals, program playback portals, or virtual community portals), interface elements included in the level i area Y are adjacent, an absolute value of a difference between a quantity of interface elements included in the level i area X and a quantity of interface elements included in the level i area Y is less than or equal to a first threshold, or an absolute value of a difference between an area of the level i area X and an area of the level i area Y is less than or equal to a second threshold. Certainly, area division may also be performed on the user interface based on another policy.

Specific values of the first threshold and the second threshold may be set according to a specific scenario requirement. For example, the first threshold may be equal to 0, 1, 2, 4, 5, or another value, where a smaller value of the first threshold indicates that quantities of interface elements included in the level i areas are closer. For example, the second threshold may be equal to 0 unit areas, 1 unit area, 2 unit areas, 3 unit areas, 5 unit areas, or another area, a smaller second threshold indicates that areas of the level i areas are closer.

For ease of better understanding and implementation of the foregoing solutions of the embodiments of the present invention, descriptions are provided below by using examples with reference to some specific application scenarios.

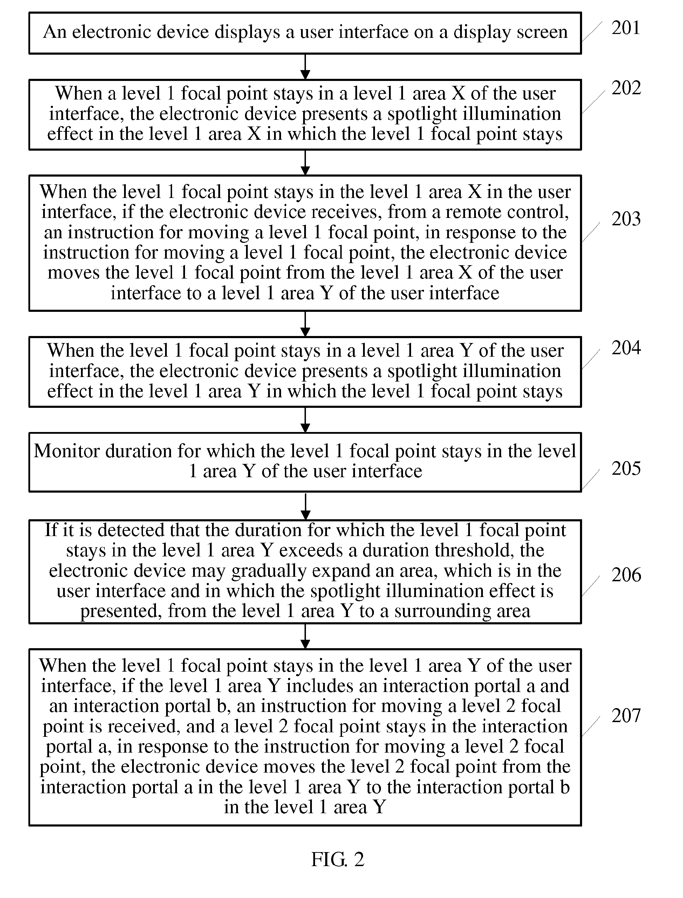

Referring to FIG. 2, FIG. 2 is a schematic flowchart of another user interface based interaction method according to another embodiment of the present invention. As shown in FIG. 2, another user interface based interaction method provided in another embodiment of the present invention may include the following content:

Step 201. An electronic device displays a user interface on a display screen.

Step 202. When a level 1 focal point stays in a level 1 area X of the user interface, the electronic device presents a spotlight illumination effect in the level 1 area X in which the level 1 focal point stays.

The presenting a spotlight illumination effect in the level 1 area X in which the level 1 focal point stays may be considered as a specific implementation manner of making display brightness of the level 1 area X different from display brightness of at least one level 1 area in the user interface except the level 1 area X. Certainly, it is also a specific implementation manner of making a display state of the level 1 area X different from a display state of the at least one level 1 area in the user interface except the level 1 area X.

FIG. 3-a, FIG. 3-b, and FIG. 3-c are several schematic diagrams of presenting a spotlight illumination effect in an area of a user interface.

Alternatively, at least one of the following operations may also be performed to make the display state of the level 1 area X different from the display state of the at least one level 1 area in the user interface except the level 1 area X:
making a display background of the level 1 area X different from a display background of the at least one level 1 area in the user interface except the level 1 area X, making display contrast of the level 1 area X different from display contrast of the at least one level 1 area in the user interface except the level 1 area X, making color saturation of the level 1 area X different from color saturation of the at least one level 1 area in the user interface except the level 1 area X, making transparency of the level 1 area X different from transparency of the at least one level 1 area in the user interface except the level 1 area X (FIG. 3-d shows that transparency of a level 1 area in which the level 1 focal point stays is lower than transparency of other surrounding areas), making a deformation degree of the level 1 area X different from a deformation degree of the at least one level 1 area in the user interface except the level 1 area X (FIG. 3-g shows that a deformation degree of a level 1 area in which the level 1 focal point stays is higher than deformation degrees of other surrounding areas), making a depth-of-field value of the level 1 area X different from a depth-of-field value of the at least one level 1 area in the user interface except the level 1 area X (FIG. 3-e shows that a depth-of-field value of a level 1 area in which the level 1 focal point stays is higher than depth-of-field values of other surrounding areas), making a covering of the level 1 area X different from a covering of the at least one level 1 area in the user interface except the level 1 area X, making a display layer of the level 1 area X different from a display layer of a level 1 area that is adjacent to the level 1 area X and in the user interface (for example, the display layer of the level 1 area X is made to be in front of the display layer of the level 1 area that is adjacent to the level 1 area X and in the user interface (FIG. 3-f to FIG. 3-i show that a display layer of a level 1 area in which the level 1 focal point stays is made gradually, by means of gradual deformation, to be in front of a display layer of a level 1 area that is adjacent to the level 1 area X and in the user interface), or the display layer of the level 1 area X is made to be behind the display layer of the level 1 area that is adjacent to the level 1 area X and in the user interface).

Certainly, in some possible implementation manners of the present invention, another operation may also be performed to make the display state of the level 1 area X different from the display state of the at least one level 1 area in the user interface except the level 1 area X.

Step 203. When the level 1 focal point stays in the level 1 area X of the user interface, if the electronic device receives, from a remote control, an instruction for moving a level 1 focal point, in response to the instruction for moving a level 1 focal point, the electronic device moves the level 1 focal point from the level 1 area X of the user interface to a level 1 area Y of the user interface.

FIG. 3-c shows a level 1 area in which the level 1 focal point currently stays, which is different from an area in which the level 1 focal point stays shown in FIG. 3-b. For example, after receiving, from a remote control, an instruction for moving a level 1 focal point, the electronic device moves the level 1 focal point from one level 1 area to another level 1 area.

Step 204. When the level 1 focal point stays in a level 1 area Y of the user interface, the electronic device presents a spotlight illumination effect in the level 1 area Y in which the level 1 focal point stays.

The presenting a spotlight illumination effect in the level 1 area Y in which the level 1 focal point stays may be considered as a specific implementation manner of making display brightness of a level 1 area Y different from display brightness of the at least one level 1 area in the user interface except the level 1 area Y Certainly, it is also a specific implementation manner of making a display state of the level 1 area Y different from a display state of the at least one level 1 area in the user interface except the level 1 area Y

Alternatively, at least one of the following operations may also be performed to make the display state of the level 1 area Y different from the display state of the at least one level 1 area in the user interface except the level 1 area Y: making the display background of the level 1 area Y different from the display background of the at least one level 1 area in the user interface except the level 1 area Y, making display contrast of the level 1 area Y different from display contrast of the at least one level 1 area in the user interface except the level 1 area Y, making color saturation of the level 1 area Y different from color saturation of the at least one level 1 area in the user interface except the level 1 area Y, making transparency of the level 1 area Y different from transparency of the at least one level 1 area in the user interface except the level 1 area Y, making a deformation degree of the level 1 area Y different from a deformation degree of the at least one level 1 area in the user interface except the level 1 area Y, making a depth-of-field value of the level 1 area Y different from a depth-of-field value of the at least one level 1 area in the user interface except the level 1 area Y, making a covering of the level 1 area Y different from a covering of the at least one level 1 area in the user interface except the level 1 area Y, making a display layer of the level 1 area Y different from a display layer of a level 1 area that is adjacent to the level 1 area Y and in the user interface (for example, the display layer of the level 1 area Y is made to be in front of the display layer of the level 1 area that is adjacent to the level 1 area Y and in the user interface, or the display layer of the level 1 area Y is made to be behind the display layer of the level 1 area that is adjacent to the level 1 area Y and in the user interface).

Certainly, in some possible implementation manners of the present invention, another operation may also be performed to make the display state of the level 1 area Y different from the display state of the at least one level 1 area in the user interface except the level 1 area Y

Step 205. Monitor duration for which the level 1 focal point stays in the level 1 area Y of the user interface.

Step 206. If it is detected that the duration for which the level 1 focal point stays in the level 1 area Y exceeds a duration threshold, the electronic device may gradually expand an area, which is in the user interface and in which the spotlight illumination effect is presented, from the level 1 area Y to a surrounding area (where the area may be expanded to the entire user interface). That the electronic device gradually expands an area, which is in the user interface and in which the spotlight illumination effect is presented, from the level 1 area Y to a surrounding area may be considered as a specific implementation manner of making display states of the level 1 area Y and a level 1 area surrounding the level 1 area Y the same.

FIG. 3-j shows that an area in which a spotlight illumination effect is presented is gradually expanded to a surrounding area based on a case shown in FIG. 3-c.

Step 207. When the level 1 focal point stays in the level 1 area Y of the user interface, if the level 1 area Y includes an interaction portal a and an interaction portal b (for example, the interaction portal a is adjacent to the interaction portal b), an instruction for moving a level 2 focal point is received, and a level 2 focal point stays in the interaction portal a, in response to the instruction for moving a level 2 focal point, the electronic device moves the level 2 focal point from the interaction portal a in the level 1 area Y to the interaction portal b in the level 1 area Y.

FIG. 3-k shows an example of a possible manner of moving the level 2 focal point between two adjacent interaction portals, where deformation of the level 2 focal point during movement between the interaction portals is similar to a physical form of a jelly during movement, flexible body deformation is performed during the movement, and a slight elastic-force effect is generated when the movement is completed.

It can be seen that at least two levels of focal points are brought in the solution of this embodiment to assist in locating a target interface element, where when a level 1 focal point stays in a level 1 area X of a user interface, if an instruction for moving a level 1 focal point is received, in response to the instruction for moving a level 1 focal point, the level 1 focal point is moved from the level 1 area X of the user interface to a level 1 area Y of the user interface. Because the level 1 focal point is moved between areas, the level 1 focal point can be moved across multiple interface elements by performing one movement operation, and a current moving range of a level 2 focal point is a level 1 area in which the level 1 focal point currently stays; this helps rapidly locate a target interface element, thereby reducing a quantity of operations required when a user selects a target interface element in a user interface, and improving user experience.

Referring to FIG. 4A and FIG. 4B, FIG. 4A and FIG. 4B are a schematic flowchart of another user interface based interaction method according to another embodiment of the present invention. As shown in FIG. 4A and FIG. 4B, another user interface based interaction method provided in another embodiment of the present invention may include the following content:

Step 401. An electronic device displays a user interface on a display screen.

Step 402. When a level 1 focal point stays in a level 1 area X of the user interface, the electronic device presents a spotlight illumination effect in the level 1 area X in which the level 1 focal point stays.

For some specific implementation manners and alternative implementation manners of step 402, reference may be made to related descriptions in step 202.

Step 403. When the level 1 focal point stays in the level 1 area X of the user interface, if the electronic device receives, from a remote control, an instruction for moving a level 1 focal point, in response to the instruction for moving a level 1 focal point, the electronic device moves the level 1 focal point from the level 1 area X of the user interface to a level 1 area Y of the user interface.

The level 1 area X is adjacent to or not adjacent to the level 1 area Y.

Step 404. When the level 1 focal point stays in the level 1 area Y of the user interface, the electronic device presents a spotlight illumination effect in the level 1 area Y in which the level 1 focal point stays.

For some specific implementation manners and alternative implementation manners of step 404, reference may be made to related descriptions in step 204.

Step 405. Monitor duration for which the level 1 focal point stays in the level 1 area Y of the user interface.

Step 406. If it is detected that the duration for which the level 1 focal point stays in the level 1 area Y exceeds a duration threshold, the electronic device may gradually expand an area, which is in the user interface and in which the spotlight illumination effect is presented, from the level 1 area Y to a surrounding area. That the electronic device gradually expands an area, which is in the user interface and in which the spotlight illumination effect is presented, from the level 1 area Y to a surrounding area may be considered as a specific implementation manner of making display states of the level 1 area Y and a level 1 area surrounding the level 1 area Y the same.

Step 407. When the level 1 focal point stays in the level 1 area Y of the user interface, if the level 1 area Y includes a level 2 area a2 and a level 2 area b2, an instruction for moving a level 2 focal point is received, and a level 2 focal point stays in the level 2 area a2, in response to the instruction for moving a level 2 focal point, move the level 2 focal point from the level 2 area a2 in the level 1 area Y to the level 2 area b2 in the level 1 area Y (where the level 2 area a2 is adjacent to the level 2 area b2).

Step 408. When the level 2 focal point stays in the level 2 area b2 in the level 1 area Y, the electronic device displays, according to a first display parameter, the level 2 area b2 in which the level 2 focal point stays, and the electronic device displays, according to a second display parameter, at least one level 2 area (including the level 2 area a2) in the user interface except the level 2 area b2.

A display parameter corresponding to the level 2 area b2 is different from a display parameter corresponding to the at least one level 2 area, so that a display state of the level 2 area b2 is different from a display state of the at least one level 2 area (including the level 2 area a2) in the user interface except the level 2 area b2.

Step 409. Monitor duration for which the level 2 focal point stays in the level 2 area b2 of the user interface.

Step 410. If it is detected that the duration for which the level 2 focal point stays in the level 2 area b2 exceeds a duration threshold, the electronic device displays the level 2 area b2 and the foregoing at least one level 2 area according to a third display parameter.

The display parameter corresponding to the level 2 area b2 is the same as the display parameter corresponding to the at least one level 2 area, so that the display state of the level 2 area b2 is the same as the display state of the at least one level 2 area (including the level 2 area a2) in the user interface except the level 2 area b2.

411. When the level 2 focal point stays in the level 2 area b2 of the user interface, if the level 2 area b2 includes an interaction portal a3 and an interaction portal b3 that are adjacent, an instruction for moving a level 3 focal point is received, and a level 3 focal point stays in the interaction portal a3, in response to the instruction for moving a level 3 focal point, move the level 3 focal point from the interaction portal a3 in the level 2 area b2 to the interaction portal b3.

It can be seen that at least three levels of focal points are brought in the solution of this embodiment to assist in locating a target interface element, where when a level 1 focal point stays in a level 1 area X of a user interface, if an instruction for moving a level 1 focal point is received, in response to the instruction for moving a level 1 focal point, the level 1 focal point is moved from the level 1 area X of the user interface to a level 1 area Y of the user interface. Because the level 1 focal point is moved between areas, the level 1 focal point can be moved across multiple interface elements by performing one movement operation, and a current moving range of a level 2 focal point is a level 1 area in which the level 1 focal point currently stays, a current moving range of a level 3 focal point is a level 2 area in which the level 2 focal point currently stays, and so on; this helps rapidly locate a target interface element, thereby reducing a quantity of operations required when a user selects a target interface element in a user interface, and improving user experience.

Referring to FIG. 5, FIG. 5 is a schematic flowchart of another user interface based interaction method according to another embodiment of the present invention. As shown in FIG. 5, another user interface based interaction method provided in another embodiment of the present invention may include the following content:

Step 501. An electronic device displays a user interface on a display screen.

Step 502. When a level 1 focal point stays in a level 1 area X of the user interface, the electronic device presents a spotlight illumination effect in the level 1 area X in which the level 1 focal point stays.

For some specific implementation manners and alternative implementation manners of step 502, reference may be made to related descriptions in step 202.

Step 503. Monitor duration for which the level 1 focal point stays in the level 1 area X of the user interface.

Step 504. If it is detected that the duration for which the level 1 focal point stays in the level 1 area X exceeds a duration threshold, the electronic device may gradually expand an area, which is in the user interface and in which the spotlight illumination effect is presented, from the level 1 area X to a surrounding area. That the electronic device gradually expands an area, which is in the user interface and in which the spotlight illumination effect is presented, from the level 1 area X to a surrounding area may be considered as a specific implementation manner of making display states of the level 1 area X and a level 1 area surrounding the level 1 area X the same.

Step 505. When the level 1 focal point stays in the level 1 area X of the user interface, if the level 1 area X includes a level 2 area a2 and a level 2 area b2, an instruction for moving a level 2 focal point is received, and a level 2 focal point stays in the level 2 area a2, in response to the instruction for moving a level 2 focal point, move the level 2 focal point from the level 2 area a2 in the level 1 area X to the level 2 area b2 in the level 1 area X (where the level 2 area a2 is adjacent to the level 2 area b2).

Step 506. When the level 2 focal point stays in the level 2 area b2 in the level 1 area X, the electronic device displays, according to a first display parameter, the level 2 area b2 in which the level 2 focal point stays, and the electronic device displays, according to a second display parameter, at least one level 2 area (including the level 2 area a2) in the user interface except the level 2 area b2.

A display parameter corresponding to the level 2 area b2 is different from a display parameter corresponding to the at least one level 2 area, so that a display state of the level 2 area b2 is different from a display state of the at least one level 2 area (including the level 2 area a2) in the user interface except the level 2 area b2.

Step 507. Monitor duration for which the level 2 focal point stays in the level 2 area b2 of the user interface.

Step 508. If it is detected that the duration for which the level 2 focal point stays in the level 2 area b2 exceeds a duration threshold, the electronic device displays the level 2 area b2 and the foregoing at least one level 2 area according to a third display parameter.

The display parameter corresponding to the level 2 area b2 is the same as the display parameter corresponding to the at least one level 2 area (where both of the parameters are the third display parameter), so that the display state of the level 2 area b2 is the same as the display state of the at least one level 2 area (which may include the level 2 area a2) in the user interface except the level 2 area b2.

Step 509. When the level 2 focal point stays in the level 2 area b2 of the user interface, if the level 2 area b2 includes an interaction portal a3 and an interaction portal b3 that are adjacent, an instruction for moving a level 3 focal point is received, and a level 3 focal point stays in the interaction portal a3, in response to the instruction for moving a level 3 focal point, move the level 3 focal point from the interaction portal a3 in the level 2 area b2 to the interaction portal b3.

It can be seen that at least three levels of focal points are brought in the solution of this embodiment to assist in locating a target interface element, where when a level 2 focal point stays in a level 2 area a2 of a level 1 area X in which a level 1 focal point stays, if an instruction for moving a level 2 focal point is received, in response to the instruction for moving a level 2 focal point, the level 2 focal point is moved from the level 2 area a2 to a level 2 area b2. Because the level 2 focal point is moved between areas, the level 2 focal point can be moved across multiple interface elements by performing one movement operation, and a current moving range of a level 2 focal point is a level 1 area in which the level 1 focal point currently stays, a current moving range of a level 3 focal point is a level 2 area in which the level 2 focal point currently stays, and so on; this helps rapidly locate a target interface element, thereby reducing a quantity of operations required when a user selects a target interface element in a user interface, and improving user experience.

To better implement the foregoing solutions of the embodiments of the present invention, some related apparatuses used to implement the foregoing solutions are further provided below.

Referring to FIG. 6, an electronic device 600 provided in an embodiment of the present invention may include: a display unit 610 and a focal point moving unit 620.

The display unit 610 is configured to display a user interface.

For example, the display unit 610 may display a user interface on a display screen. The display screen may be a component of the electronic device 600, or may be a device connected to the electronic device 600.

The focal point moving unit 620 is configured to: when a level i focal point stays in a level i area X of the user interface, if an instruction for moving a level i focal point is received, in response to the instruction for moving a level i focal point, move the level i focal point from the level i area X of the user interface to a level i area Y of the user interface, where the level i area Y includes an interface element a and an interface element b; and when the level i focal point stays in the level i area Y of the user interface, if an instruction for moving a level i+1 focal point is received, in response to the instruction for moving a level i+1 focal point, move a level i+1 focal point from the interface element a in the level i area Y to the interface element b in the level i area Y.

Optionally, in some possible implementation manners of the present invention, the electronic device 600 further includes:
a highlight control unit 630, configured to: when the level i focal point is moved from the level i area X to the level i area Y, display the level i area Y according to a first display parameter, and display at least one level i area in the user interface except the level i area Y according to a second display parameter, where the first display parameter is different from the second display parameter. For example, the foregoing at least one level i area may include all level i areas in the user interface except the level i area Y. For another example, the foregoing at least one level i area may include some or all level i areas in the user interface that are around the level i area Y. For another example, the foregoing at least one level i area may include some or all level i areas in the user interface that are adjacent to the level i area Y.

It can be understood that when the level i focal point is moved from the level i area X to the level i area Y, the level i area Y is displayed according to the first display parameter, and the at least one level i area in the user interface except the level i area Y is displayed according to the second display parameter; because the first display parameter is different from the second display parameter, a display state of the level i area Y is different from display states of some or all level i areas in the user interface that are adjacent to the level i area Y; one objective of this is to help a user distinguish the level i area in which the level i focal point currently stays.

Optionally, in some possible implementation manners of the present invention,
the highlight control unit 630 is further configured to: when duration for which the level i focal point stays in the level i area Y exceeds a duration threshold, display the level i area Y and the at least one level i area according to a third display parameter, where the third display parameter is the same as or different from the first display parameter, or the third display parameter is the same as or different from the second display parameter.

The foregoing duration threshold may be, for example, 2 seconds, 3 seconds, 5 seconds, or other duration. It is found by analyzing user behaviors that when the duration for which the level i focal point stays in the level i area Y exceeds the duration threshold, it generally indicates that the user may want to select an interaction portal located in the level i area Y The level i area Y and the at least one level i area are displayed according to the third display parameter, so that a display state of the level i area Y is the same as a display state of the at least one level i area. This, to some extent, helps improve user experience.

That the first display parameter is different from the second display parameter may cause that the level i area Y and the at least one level i area present different display states. Optionally, in some possible implementation manners of the present invention, that the first display parameter is different from the second display parameter is specifically at least one of the following: display brightness corresponding to the first display parameter is different from display brightness corresponding to the second display parameter, a display background corresponding to the first display parameter is different from a display background corresponding to the second display parameter, display contrast corresponding to the first display parameter is different from display contrast corresponding to the second display parameter, color saturation corresponding to the first display parameter is different from color saturation corresponding to the second display parameter, display transparency corresponding to the first display parameter is different from display transparency corresponding to the second display parameter, a depth-of-field value corresponding to the first display parameter is different from a depth-of-field value corresponding to the second display parameter, a display deformation degree corresponding to the first display parameter is different from a display deformation degree corresponding to the second display parameter, an area covering corresponding to the first display parameter is different from an area covering corresponding to the second display parameter, and a display layer corresponding to the first display parameter is different from a display layer corresponding to the second display parameter (for example, a display layer of the level i area Y is in front of a display layer of a level i area that is adjacent to the level i area Y and in the user interface, or a display layer of the level i area Y is behind a display layer of a level i area that is adjacent to the level i area Y and in the user interface).

Optionally, in some possible implementation manners of the present invention, the interface element b is an interaction portal or a level i+1 area Z in the level i area Y.

Optionally, in some possible implementation manners of the present invention,
the interface element b is the level i+1 area Z in the level i area Y, where the level i+1 area Z includes an interface element c and an interface element d.

The focal point moving unit 620 is further configured to: when the level i+1 focal point stays in the level i+1 area Z, if an instruction for moving a level i+2 focal point is received, in response to the instruction for moving a level i+2 focal point, move a level i+2 focal point from the interface element c in the level i+1 area Z to the interface element d in the level i+1 area Z.

The interface element c may be an interaction portal or a level i+2 area W in the level i+1 area Z. The interface element d may also be an interaction portal or a level i+2 area W2 in the level i+1 area Z.

The interface element a and the interface element b may be two adjacent interface elements.

The interface element is a component of the user interface, and the interface element may be an area, an interaction portal, or another object.

i may be an integer, and focal points of two adjacent levels may be considered as having a relationship of a child focal point and a parent focal point.

For example, the level i+1 focal point may be considered as a child focal point of the level i focal point. The level i focal point may be considered as a parent focal point of the level i+1 focal point. The child focal point and the parent focal point are relative concepts, that is, a given focal point may be a child focal point of a focal point, and the given focal point may also be a parent focal point of another focal point. For example, although the level i+1 focal point may be considered as a child focal point of the level i focal point, the level i+1 focal point may also be considered as a parent focal point of a level i+2 focal point, and the level i focal point may also be considered as a child focal point of a level i-1 focal point.

It can be understood that a current moving range of a focal point is an area in which a parent focal point of the focal point currently stays. For example, a current moving range of the level i+1 focal point is a level i area in which the level i focal point currently stays. Specifically, for example, if the level i focal point currently stays in the level i area X of the user interface, the level i+1 focal point may be currently moved between interface elements included in the level i area X. Specifically, for another example, when the level i focal point currently stays in the level i area Y of the user interface, the level i+1 focal point may be moved between interface elements included in the level i area Y, and so on.

The level i area is an area in which the level i focal point can stay or an area to which the level i focal point can be switched or moved, and the user interface includes multiple level i areas. If a level i-1 area exists, one level i-1 area may include at least one level i area.

It can be understood that the interaction portal in the user interface may be, for example, a lower-level menu portal, a higher-level menu portal, a lower-level page portal, a higher-level page portal, a program playback portal, a game running portal, or another application portal. Therefore, by selecting an interaction portal, the user may enter a lower-level menu, a higher-level menu, a lower-level page, a higher-level page, playback of a program, running of a game, or the like.

It can be understood that, one objective of setting the display state of the level i area Y to be different from the display state of the at least one level i area in the user interface except the level i area Y is to highlight the area in which the level i focal point currently stays, so that the user can intuitively view the area in which the level i focal point currently stays.

Optionally, in some possible implementation manners of the present invention, the instruction for moving a level i focal point may be sent by a remote control, an air mouse, or a keyboard. Certainly, another instruction for moving another focal point may also be sent by a remote control, an air mouse, or a keyboard.

Optionally, in some possible implementation manners of the present invention, types of interface elements included in the level i area Y are the same (in other words, types of interface elements in a same level i area are the same, for example, are all game portals, program playback portals, or virtual community portals), interface elements included in the level i area Y are adjacent, an absolute value of a difference between a quantity of interface elements included in the level i area X and a quantity of interface elements included in the level i area Y is less than or equal to a first threshold, or an absolute value of a difference between an area of the level i area X and an area of the level i area Y is less than or equal to a second threshold. Certainly, area division may also be performed on the user interface based on another policy.

Specific values of the first threshold and the second threshold may be set according to a specific scenario requirement. For example, the first threshold may be equal to 0, 1, 2, 4, 5, or another value, where a smaller value of the first threshold indicates that quantities of interface elements included in the level i areas are closer. For example, the second threshold may be equal to 0 unit areas, 1 unit area, 2 unit areas, 3 unit areas, 5 unit areas, or another area, a smaller second threshold indicates that areas of the level i areas are closer.

It can be understood that functions of the units of the electronic device 600 in this embodiment may be specifically implemented according to the methods introduced in the foregoing method embodiments, and for specific implementation processes thereof, reference may be made to related descriptions in the foregoing embodiments, which are not described herein again.

The electronic device 600 may be, for example, a mobile phone, a tablet computer, a notebook computer, a television, or a smart home device.

It can be seen that multiple levels of focal points are brought in this embodiment to assist in locating a target interface element. When a level i focal point stays in a level i area X of a user interface, if an electronic device 600 receives an instruction for moving a level i focal point, in response to the instruction for moving a level i focal point, the electronic device 600 moves the level i focal point from the level i area X of the user interface to a level i area Y of the user interface. Because the level i focal point is moved between areas, the level i focal point can be moved across multiple interface elements by performing one movement operation, and a current moving range of a level i+1 focal point is a level i area in which the level i focal point currently stays; this helps rapidly locate a target interface element, thereby reducing a quantity of operations required when a user selects a target interface element in a user interface, and improving user experience.

Referring to FIG. 7, FIG. 7 is a structural block diagram of an electronic device 700 according to another embodiment of the present invention. The electronic device 700 may include at least one processor 701, a memory 705, and at least one communications bus 702. The communications bus 702 is configured to implement connection communication between these components. The electronic device 700 optionally includes a user interface 703, including a display (such as a touchscreen, a liquid crystal display, holographic imaging (holographic in English) or a projector (projector in English)), a pointer device (such as a mouse, a trackball (trackball in English), a touch panel, or a touchscreen), a camera, and/or a pickup apparatus, or the like. The electronic device 700 optionally may further include at least one network interface 704.

The memory 705 may include a read-only memory and a random access memory, and provide an instruction and data for the processor 701. A part of the memory 705 may further include a non-volatile random access memory.

In some implementation manners, the memory 705 stores the following elements, executable modules or data structures, or a subset thereof, or an extension set thereof:
an operating system 7051, including various system programs, configured to implement various fundamental services and process hardware-based tasks; and
an application program module 7052, including various application programs, configured to implement various application services, where
the application program module 7052 may include but is not limited to at least one of a display unit 610, a focal point moving unit 620, and a highlight control unit 630.

In this embodiment of the present invention, by calling a program or an instruction stored in a memory 705, a processor 701 displays a user interface; when a level i focal point stays in a level i area X of the user interface, if an instruction for moving a level i focal point is received, in response to the instruction for moving a level i focal point, moves the level i focal point from the level i area X of the user interface to a level i area Y of the user interface, where the level i area Y includes an interface element a and an interface element b; and when the level i focal point stays in the level i area Y of the user interface, if an instruction for moving a level i+1 focal point is received, in response to the instruction for moving a level i+1 focal point, moves a level i+1 focal point from the interface element a in the level i area Y to the interface element b in the level i area Y.

The interface elements included in the level i area Y may be, for example, an interaction portal or a level i+1 area. For example, the interface element b is an interaction portal or a level i+1 area Z in the level i area Y.

i may be an integer, and focal points of two adjacent levels may be considered as having a relationship of a child focal point and a parent focal point.

For example, the level i+1 focal point may be considered as a child focal point of the level i focal point. The level i focal point may be considered as a parent focal point of the level i+1 focal point. The child focal point and the parent focal point are relative concepts, that is, a given focal point may be a child focal point of a focal point, and the given focal point may also be a parent focal point of another focal point. For example, although the level i+1 focal point may be considered as a child focal point of the level i focal point, the level i+1 focal point may also be considered as a parent focal point of a level i+2 focal point, and the level i focal point may also be considered as a child focal point of a level i-1 focal point.

It can be understood that a current moving range of a focal point is an area in which a parent focal point of the focal point currently stays. For example, a current moving range of the level i+1 focal point is a level i area in which the level i focal point currently stays. Specifically, for example, if the level i focal point currently stays in the level i area X of the user interface, the level i+1 focal point may be currently moved between interface elements included in the level i area X. Specifically, for another example, when the level i focal point currently stays in the level i area Y of the user interface, the level i+1 focal point may be moved between interface elements included in the level i area Y, and so on.

The level i area is an area in which the level i focal point can stay or an area to which the level i focal point can be switched or moved, and the user interface includes multiple level i areas.

Optionally, in some possible implementation manners of the present invention, the processor 701 may further be configured to: display the level i area Y according to a first display parameter, and display at least one level i area in the user interface except the level i area Y according to a second display parameter, where the first display parameter is different from the second display parameter. For example, the foregoing at least one level i area may include all level i areas in the user interface except the level i area Y. For another example, the foregoing at least one level i area may include some or all level i areas in the user interface that are around the level i area Y For another example, the foregoing at least one level i area may include some or all level i areas in the user interface that are adjacent to the level i area Y.

It can be understood that when the level i focal point is moved from the level i area X to the level i area Y, the level i area Y is displayed according to the first display parameter, and the at least one level i area in the user interface except the level i area Y is displayed according to the second display parameter; because the first display parameter is different from the second display parameter, a display state of the level i area Y is different from display states of some or all level i areas in the user interface that are adjacent to the level i area Y; one objective of this is to help a user distinguish the level i area in which the level i focal point currently stays.

Optionally, in some possible implementation manners of the present invention, the processor 701 may further be configured to: when duration for which the level i focal point stays in the level i area Y exceeds a duration threshold, display the level i area Y and the at least one level i area according to a third display parameter. The third display parameter is the same as or different from the first display parameter, or the third display parameter is the same as or different from the second display parameter.

The foregoing duration threshold may be, for example, 2 seconds, 3 seconds, 5 seconds, or other duration. It is found by analyzing user behaviors that when the duration for which the level i focal point stays in the level i area Y exceeds the duration threshold, it generally indicates that the user may want to select an interaction portal located in the level i area Y The level i area Y and the at least one level i area are displayed according to the third display parameter, so that a display state of the level i area Y is the same as a display state of the at least one level i area. This, to some extent, helps improve user experience.

It can be understood that the interaction portal in the user interface may be, for example, a lower-level menu portal, a higher-level menu portal, a lower-level page portal, a higher-level page portal, a program playback portal, a game running portal, or another application portal. Therefore, by selecting an interaction portal, the user may enter a lower-level menu, a higher-level menu, a lower-level page, a higher-level page, playback of a program, running of a game, or the like.

That the first display parameter is different from the second display parameter may cause that the level i area Y and the at least one level i area present different display states. Optionally, in some possible implementation manners of the present invention, that the first display parameter is different from the second display parameter is specifically at least one of the following: display brightness corresponding to the first display parameter is different from display brightness corresponding to the second display parameter, a display background corresponding to the first display parameter is different from a display background corresponding to the second display parameter, display contrast corresponding to the first display parameter is different from display contrast corresponding to the second display parameter, color saturation corresponding to the first display parameter is different from color saturation corresponding to the second display parameter, display transparency corresponding to the first display parameter is different from display transparency corresponding to the second display parameter, a depth-of-field value corresponding to the first display parameter is different from a depth-of-field value corresponding to the second display parameter, a display deformation degree corresponding to the first display parameter is different from a display deformation degree corresponding to the second display parameter, an area covering corresponding to the first display parameter is different from an area covering corresponding to the second display parameter, and a display layer corresponding to the first display parameter is different from a display layer corresponding to the second display parameter (for example, a display layer of the level i area Y is in front of a display layer of a level i area that is adjacent to the level i area Y and in the user interface, or a display layer of the level i area Y is behind a display layer of a level i area that is adjacent to the level i area Y and in the user interface).

Certainly, in some possible implementation manners of the present invention, the processor may also use another operation to make the display state of the level i area Y different from the display state of the at least one level i area in the user interface except the level i area Y

It can be understood that, one objective of making the display state of the level i area Y different from the display state of the at least one level i area in the user interface except the level i area Y is to highlight the area in which the level i focal point currently stays, so that the user can intuitively view the area in which the level i focal point currently stays.

Optionally, in some possible implementation manners of the present invention, the interface element b is an interaction portal or a level i+1 area Z in the level i area Y. Certainly, the interface element a may also be an interaction portal or a level i+1 area Z2 in the level i area Y.

Optionally, in some possible implementation manners of the present invention, the interface element b may be a level i+1 area Z in the level i area Y, where the level i+1 area Z may include an interface element c and an interface element d. The processor is further configured to: when the level i+1 focal point stays in the level i+1 area Z, if an instruction for moving a level i+2 focal point is received, in response to the instruction for moving a level i+2 focal point, move a level i+2 focal point from the interface element c in the level i+1 area Z to the interface element d in the level i+1 area Z. The interface element c may be an interaction portal or a level i+2 area W in the level i+1 area Z. The interface element d may also be an interaction portal or a level i+2 area W2 in the level i+1 area Z.

Optionally, in some possible implementation manners of the present invention, the instruction for moving a level i focal point may be sent by a remote control, an air mouse, a keyboard, or the like. Certainly, another instruction for moving another focal point may also be sent by a remote control, an air mouse, a keyboard, or the like.

Optionally, in some possible implementation manners of the present invention, types of interface elements included in the level i area Y are the same (in other words, types of interface elements in a same level i area are the same, for example, are all game portals, program playback portals, or virtual community portals), interface elements included in the level i area Y are adjacent, an absolute value of a difference between a quantity of interface elements included in the level i area X and a quantity of interface elements included in the level i area Y is less than or equal to a first threshold, or an absolute value of a difference between an area of the level i area X and an area of the level i area Y is less than or equal to a second threshold. Certainly, area division may also be performed on the user interface based on another policy.

Specific values of the first threshold and the second threshold may be set according to a specific scenario requirement. For example, the first threshold may be equal to 0, 1, 2, 4, 5, or another value, where a smaller value of the first threshold indicates that quantities of interface elements included in the level i areas are closer. For example, the second threshold may be equal to 0 unit areas, 1 unit area, 2 unit areas, 3 unit areas, 5 unit areas, or another area, a smaller second threshold indicates that areas of the level i areas are closer.

It can be understood that functions of the units of the electronic device 700 in this embodiment may be specifically implemented according to the methods introduced in the foregoing method embodiments, and for specific implementation processes thereof, reference may be made to related descriptions in the foregoing embodiments, which are not described herein again.

The electronic device 700 may be, for example, a mobile phone, a tablet computer, a notebook computer, a television, or a smart home device.

It can be seen that multiple levels of focal points are brought in this embodiment to assist in locating a target interface element. When a level i focal point stays in a level i area X of a user interface, if an electronic device 700 receives an instruction for moving a level i focal point, in response to the instruction for moving a level i focal point, the electronic device 700 moves the level i focal point from the level i area X of the user interface to a level i area Y of the user interface. Because the level i focal point is moved between areas, the level i focal point can be moved across multiple interface elements by performing one movement operation, and a current moving range of a level i+1 focal point is a level i area in which the level i focal point currently stays; this helps rapidly locate a target interface element, thereby reducing a quantity of operations required when a user selects a target interface element in a user interface, and improving user experience.

An embodiment of the present invention further provides a computer storage medium, where the computer storage medium may store a program, and during execution, the program includes some or all steps of any user interface interaction method recorded in the foregoing method embodiments.

It should be noted that, for brief description, the foregoing method embodiments are represented as a series of actions. However, persons skilled in the art should appreciate that the present invention is not limited to the described order of the actions, because according to the present invention, some steps may be performed in other orders or simultaneously. In addition, persons skilled in the art should also understand that all the embodiments described in this specification belong to exemplary embodiments, and the involved actions and modules are not necessarily mandatory to the present invention.

In the foregoing embodiments, the description of each embodiment has respective focuses. For a part that is not described in detail in an embodiment, reference may be made to related descriptions in other embodiments.

In conclusion, multiple levels of focal points are brought in the foregoing embodiments of the present invention to assist in locating a target interface element. When a level i focal point stays in a level i area X of a user interface, if an instruction for moving a level i focal point is received, in response to the instruction for moving a level i focal point, the level i focal point is moved from the level i area X of the user interface to a level i area Y of the user interface. Because the level i focal point is moved between areas, the level i focal point can be moved across multiple interface elements by performing one movement operation, and a current moving range of a level i+1 focal point is a level i area in which the level i focal point currently stays; this helps rapidly locate a target interface element, thereby reducing a quantity of operations required when a user selects a target interface element in a user interface, and improving user experience. A guide-type primary-secondary focal point interaction manner with a sense of immersion is a reflection of visual arts and natural interaction; it greatly improves visual experience of a user, and moreover, movement efficiency of the primary focal point in a large-size area also improves a speed of interaction between the focal point and a UI element, thereby reducing a waiting time and anxiety of the user.

Further, a guide-type multilevel focal point interaction manner with a sense of immersion may be considered, to some extent, as a reflection of visual arts and natural interaction, which helps improve the visual experience of a user, and helps the user be naturally immersed in content experience. In addition, if advertisements on some pages are set by default to be locations at which a focal point of a given level stays, more operating space for advertising is provided for an operator.

Further, some focal point presenting manners have flexible visual patterns and animation effects, which, therefore, are very interesting and help attract attention of a user and arouse exploration desire of the user.

In the several embodiments provided in the present application, it should be understood that the disclosed apparatus may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a read-only memory (English: read-only memory, ROM for short), a random access memory (English: random access memory, RAM for short), a removable hard disk, a magnetic disk, a USB flash drive, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A user interface based interaction method, comprising:
displaying (101) a user interface;
when a level i focal point stays in a level i area X of the user interface, if an instruction for moving a level i focal point is received, in response to the instruction for moving a level i focal point, moving (102) the level i focal point from the level i area X of the user interface to a level i area Y of the user interface, wherein the level i area Y comprises an interface element a and an interface element b; and
when the level i focal point stays in the level i area Y of the user interface, if an instruction for moving a level i+1 focal point is received, in response to the instruction for moving a level i+1 focal point, moving (103) a level i+1 focal point from the interface element a in the level i area Y to the interface element b in the level i area Y.

2. The method according to claim 1, wherein
the method further comprises:
when the level i focal point is moved from the level i area X to the level i area Y, displaying the level i area Y according to a first display parameter, and displaying at least one level i area in the user interface except the level i area Y according to a second display parameter, wherein the first display parameter is different from the second display parameter.

3. The method according to claim 2, wherein
the method further comprises: when duration for which the level i focal point stays in the level i area Y exceeds a duration threshold, displaying the level i area Y and the at least one level i area according to a third display parameter.

4. The method according to claim 2 or 3, wherein that the first display parameter is different from the second display parameter is specifically:
at least one of the following: display brightness corresponding to the first display parameter is different from display brightness corresponding to the second display parameter, a display background corresponding to the first display parameter is different from a display background corresponding to the second display parameter, display contrast corresponding to the first display parameter is different from display contrast corresponding to the second display parameter, color saturation corresponding to the first display parameter is different from color saturation corresponding to the second display parameter, display transparency corresponding to the first display parameter is different from display transparency corresponding to the second display parameter, a depth-of-field value corresponding to the first display parameter is different from a depth-of-field value corresponding to the second display parameter, a display deformation degree corresponding to the first display parameter is different from a display deformation degree corresponding to the second display parameter, an area covering corresponding to the first display parameter is different from an area covering corresponding to the second display parameter, and a display layer corresponding to the first display parameter is different from a display layer corresponding to the second display parameter.

5. The method according to any one of claims 1 to 4, wherein the interface element b is an interaction portal or a level i+1 area Z in the level i area Y.

6. The method according to claim 5, wherein the interface element b is the level i+1 area Z in the level i area Y, wherein the level i+1 area Z comprises an interface element c and an interface element d; and
the method further comprises:
when the level i+1 focal point stays in the level i+1 area Z, if an instruction for moving a level i+2 focal point is received, in response to the instruction for moving a level i+2 focal point, moving a level i+2 focal point from the interface element c in the level i+1 area Z to the interface element d in the level i+1 area Z.

7. The method according to any one of claims 1 to 6, wherein the instruction for moving a level i focal point is sent by a remote control, an air mouse, or a keyboard.

8. The method according to any one of claims 1 to 7, wherein
types of interface elements comprised in the level i area Y are the same, interface elements comprised in the level i area Y are adjacent, an absolute value of a difference between a quantity of interface elements comprised in the level i area X and a quantity of interface elements comprised in the level i area Y is less than or equal to a first threshold, or an absolute value of a difference between an area of the level i area X and an area of the level i area Y is less than or equal to a second threshold.

9. An electronic device (600), comprising:
a display unit (610), configured to display a user interface; and
a focal point moving unit (620), configured to: when a level i focal point stays in a level i area X of the user interface, if an instruction for moving a level i focal point is received, in response to the instruction for moving a level i focal point, move the level i focal point from the level i area X of the user interface to a level i area Y of the user interface, wherein the level i area Y comprises an interface element a and an interface element b; and when the level i focal point stays in the level i area Y of the user interface, if an instruction for moving a level i+1 focal point is received, in response to the instruction for moving a level i+1 focal point, move a level i+1 focal point from the interface element a in the level i area Y to the interface element b in the level i area Y.

10. The electronic device (600) according to claim 9, wherein
the electronic device (600) further comprises:
a highlight control unit (630), configured to: when the level i focal point is moved from the level i area X to the level i area Y, display the level i area Y according to a first display parameter, and display at least one level i area in the user interface except the level i area Y according to a second display parameter, wherein the first display parameter is different from the second display parameter.

11. The electronic device (600) according to claim 10, wherein
the highlight control unit (630) is further configured to: when duration for which the level i focal point stays in the level i area Y exceeds a duration threshold, display the level i area Y and the at least one level i area according to a third display parameter.

12. The electronic device (600) according to claim 10 or 11, wherein that the first display parameter is different from the second display parameter is specifically at least one of the following:
display brightness corresponding to the first display parameter is different from display brightness corresponding to the second display parameter, a display background corresponding to the first display parameter is different from a display background corresponding to the second display parameter, display contrast corresponding to the first display parameter is different from display contrast corresponding to the second display parameter, color saturation corresponding to the first display parameter is different from color saturation corresponding to the second display parameter,
display transparency corresponding to the first display parameter is different from display transparency corresponding to the second display parameter, a depth-of-field value corresponding to the first display parameter is different from a depth-of-field value corresponding to the second display parameter, a display deformation degree corresponding to the first display parameter is different from a display deformation degree corresponding to the second display parameter, an area covering corresponding to the first display parameter is different from an area covering corresponding to the second display parameter, and a display layer corresponding to the first display parameter is different from a display layer corresponding to the second display parameter.

13. The electronic device (600) according to any one of claims 9 to 12, wherein the interface element b is an interaction portal or a level i+1 area Z in the level i area Y

14. The electronic device (600) according to claim 13, wherein the interface element b is the level i+1 area Z in the level i area Y, wherein the level i+1 area Z comprises an interface element c and an interface element d; and
the focal point moving unit (620) is further configured to: when the level i+1 focal point stays in the level i+1 area Z, if an instruction for moving a level i+2 focal point is received, in response to the instruction for moving a level i+2 focal point, move a level i+2 focal point from the interface element c in the level i+1 area Z to the interface element d in the level i+1 area Z.
